# EUROPEAN PATENT SPECIFICATION

(11) **EP 1 816 752 B1**
(45) Date of publication and mention of the grant of the patent: **28.05.2008**
(21) Application number: 06290214.3
(22) Date of filing: 06.02.2006
(51) Int. Cl.: H04B 1/38

(54) **Multi-band multi-standard modular transceiver circuit for wireless communication mobile and base stations**
Modulare Mehrband, Multi-Standard Transceiverschaltung für Mobil- und Basisstationen von Funkkommunikationssystemen
Circuit émetteur/récepteur modulaire multibande, multistandard pour stations de base et stations mobiles de telecommunication sans fil

(43) Date of publication of application: 08.08.2007
(73) Proprietor: Alcatel Lucent, 75008 Paris (FR)
(72) Inventor: Pascht, Andreas, 73635 Rudersberg (DE); Strauss, Jens, 75382 Althengstett (DE); Bitzer, Thomas, 73614 Schorndorf (DE); Bohn, Thomas, 70372 Stuttgart (DE); Haberland, Bernd, 70186 Stuttgart (DE)
(74) Representative: Brose, Gerhard

(56) References cited:
- WO-A-03/061174
- WO-A-20/04008719
- WO-A-20/05050847
- US-A- 6 072 994
- US-B1- 6 335 767

## Description

### Technical field:

The invention relates to a transceiver circuit for transmission and reception of multi-standard, multi-band radio signals.

### Background of the invention:

In the wireless telecommunication market there is a trend of introducing new modulation schemes and to extend the frequency bands of use. The intention of both trends is to increase the data rates and to enable new types of services. An example of a new type of modulation scheme providing new services is the WiMAX (Worldwide Interoperability for Microwave Access) standard providing fast Internet access via a fixed wireless link.

Thereby the problem arises, that different standards, like e.g. GSM (Global System for Mobile communication), WiMAX and UMTS (Universal Mobile Telecommunications System) use different frequency bands comprising a plurality of different carriers and/or different modulation schemes. Furthermore, different frequency bands comprising a plurality of different carriers are used for the same standards in different countries. For example, GSM uses the 0.9 GHz and 1.8 GHz frequency bands in Europe, wherein in Canada and in the United States 0.85 GHz and 1.9 GHz frequency bands are used.

A carrier, also known as Radio Frequency (RF) Channel, is a well-defined frequency band lying within the frequency band of the particular standard that is used to transport modulated data between a base station (BS) and a mobile station (MS), like e.g. a mobile phone, a Personal Digital Assistants (PDA), etc.. For example a GSM carrier has a broadness of 200 kHz lying within the particular frequency band of e.g. 0.9 GHz, 1.8 GHz or 1.9 GHz. A WiMAX carrier has a broadness up to 20 MHz and lies within the particular WiMAX frequency bands. The number of MS that can be connected with a BS via one carrier is limited and depends on the modulation scheme and on the data rate provided. Due to this, providing new services requiring higher data rates and/or being able to support a higher number of MS within a frequency band substantially requires more carriers within said frequency band an due to this requires to extend the particular frequency bands. Furthermore with the introduction of new standards it is foreseen, to successively and/or simultaneously use the frequency bands of the older standards with new standards. For example it is foreseen, to use the GSM frequency bands at least until the shutdown of the GSM standard with the UMTS standard at the same time.

The mentioned changes in modulation schemes and in the frequency bands have significant impact on the hard- and software, i.e. firmware, particularly of the respective BSs as well as the hard and software of MSs, wherein changes in modulation schemes and frequency bands are more serious regarding BSs because of their higher costs and longer lifetime.

Furthermore it has to be considered that it is essential for the manufacturers of hard- and software to be able to follow the trend on the telecommunication market and particularly in the wireless business as fast as possible.

A desired approach that allows following this trend as fast as possible is to design BSs that offer a maximum of flexibility regarding the used modulation scheme and the addressed frequency bands.

A known implementation following this approach is a base station with a single carrier multi-band UMTS transceiver circuit on a single platform. This platform is dimensioned to cover the frequency bands from 1.7 GHz to 2.7 GHz, wherein by software control, one frequency band can be selected. The transceiver circuit basically comprises a transmitter and a receiver chain plus an antenna network. The transmitter chain further comprises a power amplifier. The antenna network is connected with both, the receiver and the transmitter chain.

A drawback of this approach is that it is not multi-standard and multi-carrier capable. Another drawback of this approach is that the power amplifier has to cover the whole frequency band from 1.7 GHz to 2.7 GHz, wherein the efficiency of a power amplifier decreases the more the frequency it operates differs from its design frequency. The same applies for the antenna network. A further drawback is, that depending on the particular standard, the allowed power output, i.e. the power class of the power amplifier differs.

Further single-carrier multi-band and multi-standard transceivers are disclosed in WO 2004/008718 A and US 6,072,994.

### Object of the invention:

An object of the invention is to provide a transceiver with an improved modular design.

### Disclosure of the invention and its advantages:

The object of the invention is met by a transceiver circuit for transmission and reception of multi-standard, multi-band radio signals according to claim 1. This transceiver has a modular design comprising exchangeable and removable modules with dedicated functionalities and well defined interfaces between said modules, wherein the transceiver circuit is configurable via software, depending on the functionalities to be fulfilled by said transceiver circuit and to its particular modular assembly. The functionalities to be fulfilled by the transceiver circuit are e.g. providing a particular modulation scheme, providing at least one particular frequency band, providing a particular power class, all depending on the standard the transceiver circuit is used for, wherein the particular modular assembly of the transceiver circuit according to the invention depends on the frequency band it is used for and therewith also on the particular standard. Due to its modular assembly and its software configurable modulation scheme, the transceiver circuit according to the invention can be adapted to different standards. In this context the term modulation comprises modulation as well as demodulation.

Said transceiver circuit according to the invention has the advantage over the state of the art, that the modular design allows e.g. to connect a power amplifier module that is individually designed for a particular frequency band or for one or few particular carriers within said frequency band exchangeable and removable with the transmitter chain via the well-defined interface. This results in high power efficiency since the design frequency of the power amplifier module is close to its operation frequency. Furthermore when introducing new frequency bands, it is possible to remove the power amplifier module and to replace it by a new one, individually designed for the new frequency band. The same is possible when introducing new modulation schemes and/or new standards requiring power amplifiers within other power classes. Doing so saves costs since it is obsolete to exchange the whole transceiver circuit but only the power amplifier module. The same advantages are achieved regarding the antenna network that is also designed for a particular frequency. Using a modular design allows using removable and exchangeable antenna modules adapted on a particular frequency band and/or a particular bandwidth of a frequency band and/or on one or a particular group of carriers within a particular frequency band.

An additional advantage of the transceiver circuit according to the invention is its improved maintenance. Damages do not lead to a total exchange of the whole transceiver circuit but only to removing the damaged module.

The different standards the conversion module is capable of dealing with preferably comprise at least the GSM, UMTS, 3G LTE (Third Generation Long Term Evolution) and WiMAX standards. Additionally the conversion module preferably is capable of dealing with up to four WCDMA (Wideband Code Division Multiple Access) carriers of 20 Mhz.

The individual power amplifier modules and the individual antenna modules are dedicated with respect to the frequency band and/or the bandwidth of the frequency band they are used for, the power class according to the specification of the particular standard they are used for and the like. By connecting the conversion module with different dedicated power amplifier modules and different dedicated antenna modules, each one designed for a particular frequency band and/or for one or a group of carriers, the hardware of the transceiver circuit is adapted to a particular frequency band and standard. Furthermore by software control, the transceiver circuit is adapted to a particular standard, e.g. by selecting a particular modulation scheme.

Another part of the invention concerns a BS comprising a transceiver circuit as mentioned above.

An additional part of the invention concerns a MS comprising a transceiver circuit as mentioned above.

Furthermore the invention also comprises a method for transmitting and receiving multi-standard, multi-band radio signals by using a transceiver circuit as mentioned above, wherein said method comprises the steps of claim 6.

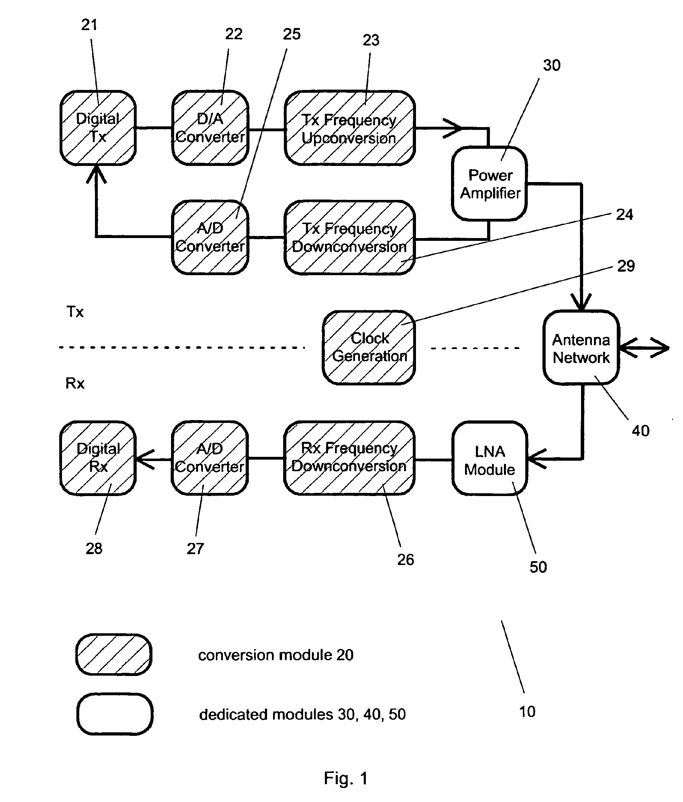

Brief description of the drawing, with
- Fig. 1: showing a diagram of a transceiver circuit according to the invention.

### Detailed description of the drawing:

A transceiver circuit 10 according to the invention as shown in Fig. 1 comprises a conversion module 20, a dedicated power amplifier module 30 to amplify outgoing, to be transmitted signals, a dedicated antenna module 40 for sending outgoing and receiving incoming signals and a dedicated LNA module 50 for amplifying incoming, received signals. The individual modules 20, 30, 40, 50 are removable and exchangeable connected with each other. At least the power amplifier 30 and antenna modules 40 connected with the conversion module 20 are individually adapted and designed for different frequency bands and power classes.

For an easier explanation, the transceiver circuit 10 can be virtually divided into a transmitter chain Tx and a receiver chain Rx. A dotted, horizontal line schematically divides both parts in Fig. 1.

The conversion module 20 on the transmitter chain Tx comprises a software configurable digital signal conditioner 21 that is able to handle different types of modulation schemes. The digital signal conditioner 21 basically is responsible for the modulation of outgoing signals, wherein the modulation is performed according to the specification of a software defined modulation scheme, e.g. according to the modulation scheme of a particular standard. Thereby it is also thinkable that the digital signal conditioner 21 performs a modulation of the outgoing signals according to more than one modulation scheme, wherein in a later stage, e.g. by the design frequency, the bandwidth and the power class of a power amplifier 30 connected with the conversion module 20, only signals that are modulated according to a particular modulation scheme and that are lying within a particular frequency band are amplified and transmitted.

Furthermore, the conversion module 20 on the transmitter chain Tx comprises a digital/analog converter 22 connected with the digital signal conditioner 21, which converts the modulated, digital signals provided by the digital signal conditioner 21 into analogue signals.

The digital/analog converter 22 itself is connected with a RF up-converter 23 that is also part of the conversion module 20. The RF up-converter 23 performs the IQ-modulation (In phase component/Quadrature component) and up-conversion of the analogue signal provided by the digital/analogue converter 22 to the respective RF band.

The RF up-converter at its output provides a well-defined interface to connect with a dedicated power amplifier 30.

Additionally, the conversion module 20 on the transmitter chain Tx also comprises a RF down-converter 24 connected with an analogue/digital converter 25. The RF down-converter 24 provides a well-defined interface to connect with a dedicated power amplifier 30. The well-defined interface of the RF down-converter 24 works as an input for a RF feedback path, comprising the RF down-converter 24 and the analogue/digital converter 25. The analogue/digital converter 25 itself is connected with the digital signal conditioner 21. The RF feedback path is required for an adaptive digital predistortion.

Basically the digital signal conditioner 21, the digital/analogue converter 22 and the RF up-converter 23 together form the conversion part on the transmitter chain Tx of the conversion module 20. The conversion part on the transmitter chain Tx of the conversion module 20 at its well-defined interface between the RF up-converter 23 and the power amplifier 30 provides signals with a defined power level, a defined bandwidth and on a defined frequency. Thereby the well-defined frequency is adjusted within the RF up-converter 23 within the conversion module 20 and depends on the power amplifier 30 to be connected with the conversion module 20, i.e. on the particular frequency band and standard. At its well-defined feedback interface between the power amplifier 30 and the RF down-converter 24 the conversion module 20 receives a feedback signal from the power amplifier 30 with a defined power level, a defined bandwidth and on a defined frequency. Said defined frequency depends on the particular standard and the frequency band of said particular standard the transceiver circuit 10 by its particular configuration and its particular modular assembly is adapted to. Said frequency again is defined by the RF up-converter 23.

The power amplifier module 30 further is connected via a well-defined interface with the antenna module 40. To ensure maximum efficiency, the antenna module 40 is individually designed regarding the frequency band, the bandwidth and the power class of the power amplifier module 30.

On the receiver chain Rx the antenna module 40 via another well-defined interface is connected with the conversion module 20. Thereby a LNA module 50 also comprising well defined interfaces is arranged between the antenna module 40 and a RF down-converter 26 of the conversion module 20. The LNA module 50 preferably is also designed regarding the frequency band and the bandwidth of incoming signals to be amplified.

On the receiver chain Rx the conversion module 20 further comprises an analogue/digital converter 27 that converts the down-converted received analogue signals into digital signals and a software configurable digital signal conditioner 28 that demodulates the received digital signals according to the modulation scheme of the particular, selected standard.

The signal conditioning part of the conversion module 20 that comprises the digital signal conditioners 21 and 28, the digital/analogue converter 22, the analogue digital converter 27, the RF up-converter 23 and the RF down-converter 26 is software defined and is able to handle different types of modulation schemes and different or multiple frequency bands.

Finally the conversion module 20 comprises a clock generator 29. The clock generator 29 provides clocking signals e.g. to the digital/analogue and analogue/digital converters 22, 25, 27, the RF up-converter 23 and the RF down-converter 26. The clock signal and the RF of outgoing and incoming signals interdepend from each other via the RF up-converter 23 and the RF down-converter 26.

Abstracted, the conversion module 20 is responsible for the digital signal conditioning and comprises functionalities like e.g. multi carrier synthesis, clipping, image suppression and digital predistortion. The conversion module 20 also comprises the functionalities of digital/analogue and analogue/digital data conversion. The last stage of the conversion module 20 performs the modulation and up-conversion to the respective RF band. It also comprises the RF part of a feedback path required for an adaptive digital predistortion. Dedicated power amplifier modules perform the amplification with at least one power amplifier module 30 optimized for a dedicated frequency band and the dedicated output power. Dedicated antenna modules 40 are optimized for a dedicated frequency band and a dedicated duplex mode (TDD or FDD) including dedicated LNA modules 50 for the receive chain Rx.

Regarding FDD, two distinct frequencies are used for uplink and downlink. Thereby the frequency separation must be coordinated using so called RF duplexer. Using TDD, two distinct sets of time slots on the same frequency for uplink and downlink are used. Using TDD there is no need for RF duplexer.

The modular concept of the transceiver circuit 10 according to the invention is driven by the idea of handling different application scenarios.

An application scenario e.g. could be:

| | |
|---|---|
| Case 1: | GSM 900 / UMTS 900 |
| Case 2: | UMTS 1800 / UMTS Core / UMTS 2600 |
| Case 3: | WiMAX 2.5 - 3.8 GHz |

Case 1 can be performed by one conversion module and two dedicated power amplifier 30 and antenna modules 40 distinguished by different frequency bands and power classes respectively. Thereby to change from GSM to UMTS standard, the modulation scheme of the conversion module is reconfigured by software control by reconfiguring the digital signal conditioner. Because the transceiver circuit according to the invention allows to change the modulation scheme of the conversion module by reconfiguring the digital signal conditioner via software control, this module has not to be exchanged when changing from GSM to UMTS standard. After software controlled reconfiguration, the hardware of the transceiver circuit has to be adapted to the new standard. Thereby the modular concept allows easily exchanging the power amplifier and the antenna modules designed for the GSM standard with power amplifier and the antenna modules designed for the UMTS standard.

In Case 2, the modulation scheme of the conversion module remains unchanged, wherein the frequency band to which the RF up-converter converts signals changes. This changing is performed by software control allowing to adapt the frequency band. To change e.g. from UMTS 1800 to UMTS 2600, only the RF up-converter has to be reconfigured via software control and the power amplifier module and the antenna module has to be exchanged. Regarding the different frequency bands of case 2 it is possible to design a power amplifier module and an antenna module with expedient efficiencies that can be used for frequencies between 1.8 GHz and 2.6 GHz. Doing so, in case 2 reconfiguration of the transceiver circuit according to the invention can be performed remotely at all.

Abstracted, all three cases can be performed by a single conversion module 20 and two dedicated power amplifier 30 and antenna modules 40 distinguished by different frequency bands and power classes respectively.

According to the invention, it is possible to easily and individually adapt the transceiver circuit on different standards, frequency bands and modulation schemes by individually designing the power amplifier and antenna modules for different frequency bands and power classes. An adaptation on different modulation schemes takes place

With a transceiver circuit according to the invention, the following advantages are achieved:
- The power amplifier modules can be optimized regarding power amplifier efficiency and power class.
- High flexibility is ensured by the modular concept with well-defined interfaces and by the configuration via software.
- Installation costs are saved because the transceiver circuit is only equipped with the hardware required to fulfill the desired functionalities, i.e. only hardware that is required for the particular frequency band and standard(s) the transceiver circuit shall be used with is installed, wherein due to the well-defined interfaces this adaptation is easy, quick and cost efficient.
- Costs of operation are saved due to an increased power amplifier efficiency compared with the state of the art, because the power amplifier modules can be individually designed with respect to their power class, the frequency band and the carriers within said frequency band they are used for.

Furthermore, maintenance and updating costs are saved. Only seldom hardware updates have to be done for all standards at the same time. As long as the specifications of the well-defined interfaces are not changed, only the affected modules, like e.g. a power amplifier module and an antenna module have to be exchanged, wherein the conversion module can be used for a very long time for all standards.

Additionally it is thinkable that particularly the software controlled reconfiguration can be performed remotely. Doing so, costs are reduced due to shorter on-site times for reconfiguration of the transceiver circuit according to the invention.

### Commercial applicability:

The invention is commercially applicable particularly in the field of production and operation of networks for wireless communication and data transmission.

### List of reference numerals

- Tx: transmitter chain
- Rx: receiver chain

- 10: transceiver circuit
- 20: conversion module
- 21: digital signal conditioner (Tx)
- 22: digital/analogue converter
- 23: RF up-converter
- 24: RF down converter (Tx feedback path)
- 25: analogue/digital converter (Tx feedback path)
- 26: RF down converter (Rx)
- 27: analogue/digital converter (Rx)
- 28: digital signal conditioner (Rx)
- 29: clock generator
- 30: power amplifier module (Tx)
- 40: antenna module
- 50: Low Noise Amplifier module (Rx)

## Claims

1. Transceiver circuit (10) for transmission and reception of multi-standard, multi-band radio signals, comprising modules (20, 30, 40, 50) which can be exchanged or removed, with dedicated functionalities and well defined interfaces between said modules (20, 30, 40, 50), and configurable via software, depending on the functionalities to be fulfilled by said transceiver circuit (10) and to its particular modular assembly,
**characterized In that**
the transceiver further comprises
- a conversion module (20) capable of dealing with frequency bands with reach from 0.9 GHz to 3.5 GHz, dealing with different standards and dealing with at least two carriers,
- dedicated power amplifier modules (30) distinguished by frequency range and power class, and
- dedicated antenna modules (40),
that the conversion module (20) comprises means for digital signal conditioning (21, 28) that are responsible for the modulation of outgoing signals and the demodulation of received digital signals, digital/analogue and analogue/digital data conversion (22, 27), up-conversion to the respective Radio Frequency band (23) and down-conversion from to the respective Radio Frequency band (26) and a Radio Frequency feedback path, and that the means for digital signal conditioning (21, 28) are software configurable in order to handle different types of modulation schemes.

2. Transceiver circuit according to one of the claim 1, **characterized in that** the different standards the conversion module is capable of dealing with comprise at least the GSM, UMTS and WiMAX standards.

3. Transceiver circuit according to one of the claim 1, **characterized in that** the conversion module is capable of dealing with up to four carriers.

4. Base station comprising a transceiver circuit according to one of the claims 1 to 3.

5. Mobile station comprising a transceiver circuit according to one of the claims 1 to 3.

6. Method for transmitting and receiving multi-standard, multi-band radio signals by means of using a transceiver circuit (10) according to claim 1, said method comprising the steps of:
- conversion of signals in frequency bands with reach from 0.9 GHz to 3.5 GHz, with different standards and with at least two carriers, in said conversion module (20) comprising said means for digital signal conditioning (21, 28) that are responsible for the modulation of outgoing signals and the demodulation of received digital signals, digital/analogue and analogue/digital data conversion (22, 27), up-conversion to the respective Radio Frequency band (23), and down-conversion from to the respective Radio Frequency band (26) and a Radio Frequency feedback path,
- performing amplification with a power amplifier optimized for a dedicated frequency band and a dedicated power class,
- using dedicated antenna modules optimized for said dedicated frequency band, and
- configuring the means for digital signal conditioning (21, 28) of the conversion module via software in order to handle a desired type of modulation scheme.

## Patentansprüche

1. Sender-/Empfängerschaltung (10) zum Senden und Empfangen von Mehrband-Funksignalen gemäß verschiedenen Standards, wobei der Sender/Empfänger Module (20, 30, 40, 50) umfasst, die ausgetauscht oder entfernt werden können, mit dedizierten Funktionen und klar definierten Schnittstellen zwischen diesen Modulen (20, 30, 40, 50), und wobei der Sender/Empfänger je nach den von dieser Sender/Empfängerschaltung (10) auszuführenden Funktionen und seinem konkreten modularen Aufbau über Software konfigurierbar ist,
**dadurch gekennzeichnet, dass**
der Sender-/Empfänger des Weiteren Folgendes umfasst:
- ein Umwandlungsmodul (20), das Frequenzbänder mit einer Reichweite von 0,9 GHz bis 3,5 GHz, verschiedene Standards und mindestens zwei Träger verarbeiten kann,
- dedizierte Leistungsverstärkungsmodule (30), **gekennzeichnet durch** den Frequenzbereich und die Leistungsklasse, und
- dedizierte Anntennenmodule (40),
das Umwandlungsmodul (20) Mittel umfasst zur digitalen Signalkonditionierung (21, 28), die verantwortlich sind für die Modulation der ausgehenden Signale und die Demodulation der empfangenen Signale, die Digital/Analog- und der Analog-Digital-Datenumwandlung (22, 27), die Aufwärtsumwandlung bis zum entsprechenden Funkfrequenzband (23) und die Abwärtsumwandlung vom entsprechenden Funkfrequenzband (26) und einen Funkfrequenz-Rückmeldungspfad,
und dass die Mittel zur digitalen Signalkonditionierung (21, 28) über Software konfigurierbar sind, um verschiedene Arten von Modulationsschemata zu verarbeiten.

2. Sender-/Empfängerschaltung gemäß Anspruch 1, **dadurch gekennzeichnet, dass** die verschiedenen Standards, die das Umwandlungsmodul verarbeiten kann, mindestens die Standards GSM, UMTS und WiMAX umfassen.

3. Sender-/Empfängerschaltung gemäß Anspruch 1, **dadurch gekennzeichnet, dass** das Umwandlungsmodul bis zu vier Träger verarbeiten kann.

4. Basisstation, die eine Sender-/Empfängerschaltung gemäß einem der Ansprüche 1 bis 3 umfasst.

5. Mobilstation, die eine Senderschaltung gemäß einem der Ansprüche 1 bis 3 umfasst.

6. Verfahren zum Senden und Empfangen von Mehrband-Funksignalen gemäß verschiedenen Standards durch Verwendung einer Sender-/Empfängerschaltung (10) gemäß Anspruch 1, wobei dieses Verfahren die folgenden Schritte umfasst:
- Umwandlung von Signalen in Frequenzbändern mit einer Reichweite von 0,9 GHz bis 3,5 GHz mit verschiedenen Standards und mindestens zwei Trägern, wobei dieses Umwandlungsmodul (20) diese Mittel zur digitalen Signalkonditionierung (21, 28) umfasst, die verantwortlich sind für die Modulation der ausgehenden Signale und die Demodulation der empfangenen digitalen Signale, die Digital/Analog- und der Analog-Digital-Dateunumwandlung (22, 27), die Aufwärtsumwandlung bis zum entsprechenden Funkfrequenzband (23) und die Abwärtsumwandlung vom entsprechenden Funkfrequenzband (26) und einen Funkfrequenz-Rückmeldungspfad,
- Durchführung der Verstärkung mit einem Leistungsverstärker, der für ein dediziertes Frequenzband und eine dedizierte Leistungsklasse optimiert wurde,
- Verwendung dedizierter Antennenmodule, die für dieses dedizierte Frequenzband optimiert wurden, und
- Konfigurieren der Mittel zur digitalen Signalkonditionierung (21, 28) des Umwandlungsmoduls über Software zur Verarbeitung eines gewünschten Typs von Modulationsschema.

## Revendications

1. Circuit émetteur-récepteur (10) pour l'émission et la réception de signaux radio multistandard, multibande, comprenant des modules (20, 30, 40, 50) qui peuvent être échangés ou supprimés, ayant des fonctionnalités dédiées et des interfaces bien définies entre lesdits modules (20, 30, 40, 50) et qui peuvent être configurés par logiciel, en fonction des fonctionnalités à remplir par ledit circuit émetteur-récepteur (10) et de son montage modulaire particulier,
**caractérisé en ce que**
l'émetteur-réceptcur comprend en outre
un module de conversion (20) capable de traiter des bandes de fréquence d'une portée de 0,9 GHz à 3,5 GHz, de traiter différents standards et de traiter au moins deux porteuses,
des modules amplificateurs de puissance dédiés (30) distingués par la plage de fréquences et la classe de puissance, et
des modules d'antenne dédiés (40),
le module de conversion (20) comprend des moyens de conditionnement de signal numérique (21, 28) qui sont responsables de la modulation des signaux sortants et de la démodulation des signaux numériques reçus, de conversion numérique/analogique et analogique/numérique (22, 27), de conversion à la hausse dans la bande de radiofréquences respective (23) et de conversion à la baisse depuis la bande de radiofréquences respective (26), et un chemin de réaction de radiofréquences, et les moyens de conditionnement de signal numérique (21, 28) sont configurables par logiciel afin de gérer différents types de schémas de modulation.

2. Circuit émetteur-récepteur selon la revendication 1, **caractérisé en ce que** les différents standards que le module de conversion est capable de traiter comprennent au moins les standards GSM, UMTS et WiMAX.

3. Circuit émetteur-récepteur selon la revendication 1, **caractérisé en ce que** le module de conversion est capable de traiter jusqu'à quatre porteuses.

4. Station de base comprenant un circuit émetteur-récepteur selon l'une quelconque des revendications 1 à 3.

5. Station mobile comprenant un circuit émetteur-récepteur selon l'une quelconque des revendications 1 à 3.

6. Procédé d'émission et de réception de signaux radio multistandard, multibande, grâce à l'utilisation d'un circuit émetteur-récepteur (10) selon la revendication 1, ledit procédé comprenant les étapes suivantes :
conversion de signaux dans des bandes de fréquences d'une portée de 0,9 GHz à 3,5 GHz, de différents standards et avec au moins deux porteuses, ledit module de conversion (20) comprenant lesdits moyens de conditionnement de signal numérique (21, 28) qui sont responsables de la modulation des signaux sortants et de la démodulation des signaux numériques reçus, de conversion numérique/analogique et analogique/numérique (22, 27), de conversion à la hausse dans la bande de radiofréquences respective (23) et de conversion à la baisse depuis la bande de radiofréquences respective (26), et un chemin de réaction de radiofréquences,
amplification au moyen d'un amplificateur de puissance optimisé pour une bande de fréquences dédiée et une classe de puissance dédiée,
utilisation de modules d'antenne dédiés optimisés pour ladite bande de fréquences dédiée, et
configuration par logiciel des moyens de conditionnement de signal numérique (21, 28) du module de conversion afin de gérer un type souhaité de schéma de modulation.
